# EUROPEAN PATENT APPLICATION

(11) **EP 4 800 592 A1**
(43) Date of publication of application: **02.09.2026**
(21) Application number: 24882363.5
(22) Date of filing: 22.10.2024
(51) Int. Cl.: G06F 21/62

(54) **INFORMATION PROCESSING METHOD, INFORMATION PROCESSING DEVICE, AND PROGRAM**

(30) Priority: 27.10.2023 US 202363545978 P
(71) Applicant: Panasonic Intellectual Property Management Co., Ltd., Kadoma-shi, Osaka 571-0057 (JP)
(72) Inventor: YAMAMOTO, Kakuya, Kadoma-shi, Osaka 571-0057 (JP); NAKASAKA, Ayaka, Kadoma-shi, Osaka 571-0057 (JP)
(74) Representative: Appelt, Christian W.
(86) International application number: PCT/JP2024/037480
(87) International publication number: WO 2025/089251

(57) **Abstract**

An information processing method includes: receiving, from a terminal, an access request for access to information included in metadata, which is stored in a storage device, of a non-fungible token (NFT) stored in the distributed ledger and associated with a physical object or a service (S101); determining whether to permit the access request from the terminal, according to access control information predetermined and indicating, for each first category indicating a type of information included in the metadata and for each second category indicating a requester requesting access to the information, whether to permit the access request for access to the information (S103); and when determining that the access request is to be permitted, performing control to enable the access (S104).

## Description

### [Technical Field]

The present invention relates to information processing methods, information processing devices, and programs.

### [Background Art]

Examples of methods for assessing the environmental impacts of human consumption activities may include conducting product life cycle assessment (LCA) (refer to non-patent literature (NPL) 1).

### [Citation List]

### [Non Patent Literature]

[NPL 1]
"Discovering All Environmental Effects: How Life Cycle Assessment with LCA Software Works," [online], iPoint-systems gmbh, [retrieved on October 1, 2024] Internet <URL: https://go.ipoint-systems.com/blog/discovering-all-environmental-effects-how-lifecycle-assessment-with-lca-software-works>

### [Summary of Invention]

### [Technical Problem]

Information used in the product lifecycle assessment needs to be properly managed as confidential information according to the required level of confidentiality management.

Thus, the present invention provides an information processing method, etc., that contributes to proper confidentiality management of information related to the assessment of environmental impacts resulting from consumption activities.

### [Solution to Problem]

An information processing method according to an aspect of the present invention is performed by a server of a ledger system including a distributed ledger and includes: receiving, from a terminal, an access request for access to information included in metadata of a non-fungible token (NFT) stored in the distributed ledger and associated with a physical object or a service, the metadata being stored in a storage device; determining, according to access control information, whether to permit the access request from the terminal, the access control information being predetermined and indicating, for each first category indicating a type of information included in the metadata and for each second category indicating a requester requesting access to the information, whether to permit the access request for access to the information; and when determining that the access request is to be permitted, performing control to enable the access.

Note that these general and specific aspects may be implemented using a system, a device, an integrated circuit, a computer program, or a computer-readable recording medium such as compact disc read-only memory (CD-ROM), or any combination of systems, devices, integrated circuits, computer programs, and recording media.

### [Advantageous Effects of Invention]

The present invention contributes to proper confidentiality management of information related to the assessment of environmental impacts resulting from consumption activities.

### [Brief Description of Drawings]

[FIG. 1]

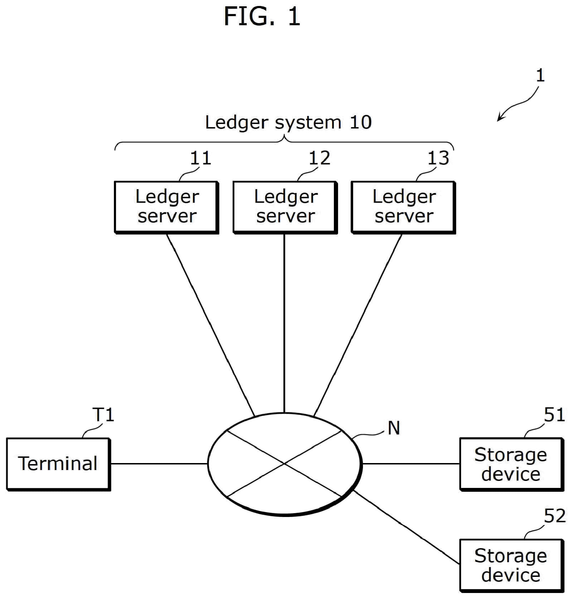

   FIG. 1 is a schematic diagram illustrating the overall configuration of an information processing system according to Embodiment 1.
[FIG. 2]

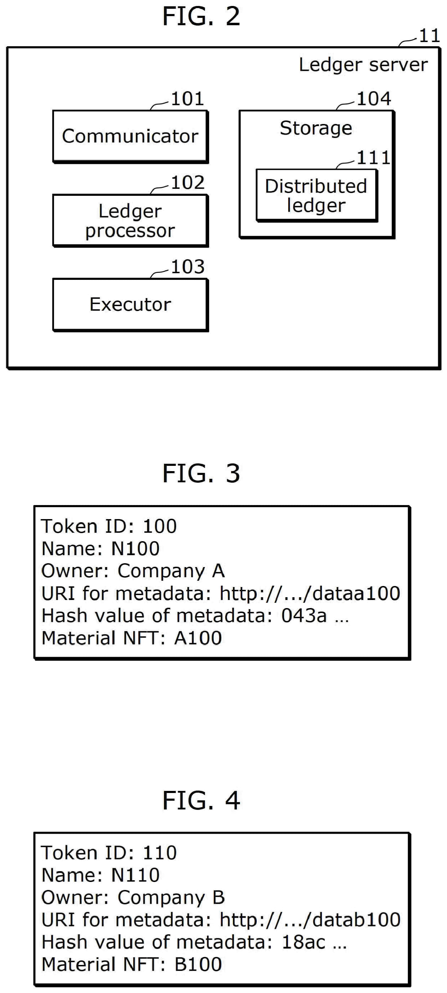

   FIG. 2 is a block diagram illustrating the functional configuration of a ledger server according to Embodiment 1.
[FIG. 3]
   FIG. 3 is an explanatory diagram illustrating the first example of information included in a traceable NFT according to Embodiment 1.
[FIG. 4]
   FIG. 4 is an explanatory diagram illustrating the second example of information included in a traceable NFT according to Embodiment 1.
[FIG. 5]

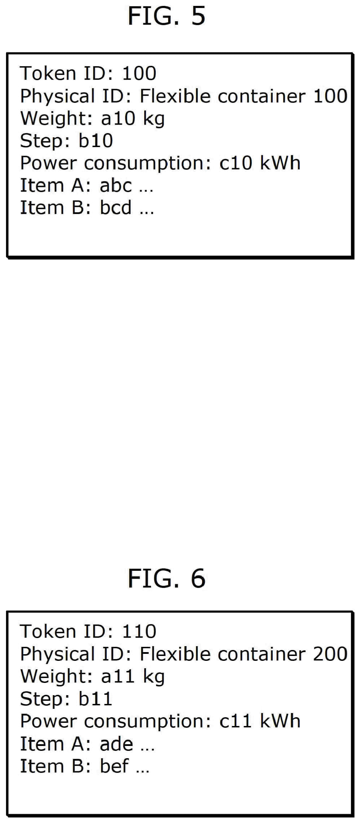

   FIG. 5 is an explanatory diagram illustrating the first example of information included in metadata according to Embodiment 1.
[FIG. 6]
   FIG. 6 is an explanatory diagram illustrating the second example of information included in metadata according to Embodiment 1.
[FIG. 7]

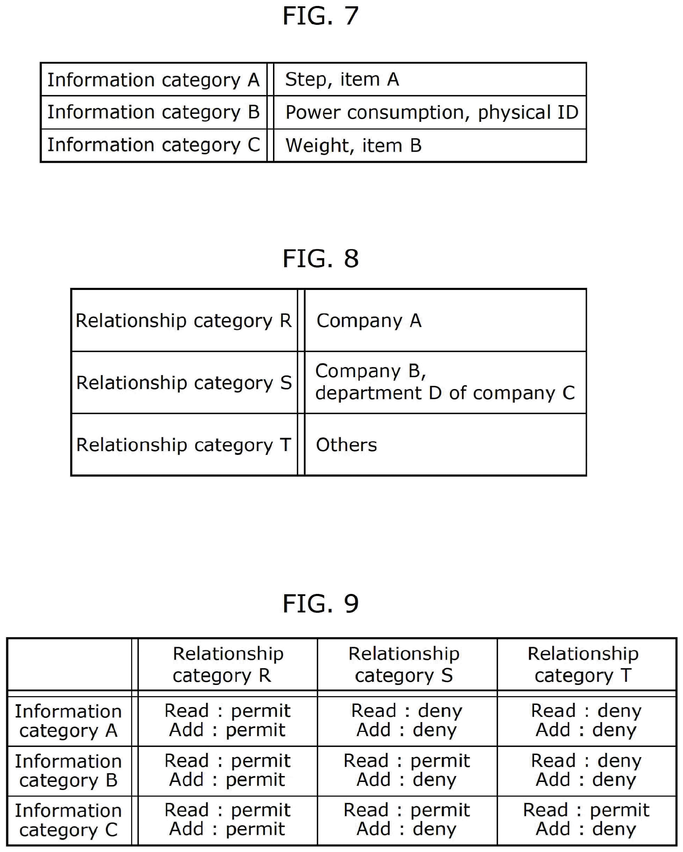

   FIG. 7 is an explanatory diagram illustrating an example of information categories according to Embodiment 1.
[FIG. 8]
   FIG. 8 is an explanatory diagram illustrating an example of relationship categories according to Embodiment 1.
[FIG. 9]
   FIG. 9 is an explanatory diagram illustrating an example of an access control table according to Embodiment 1.
[FIG. 10]

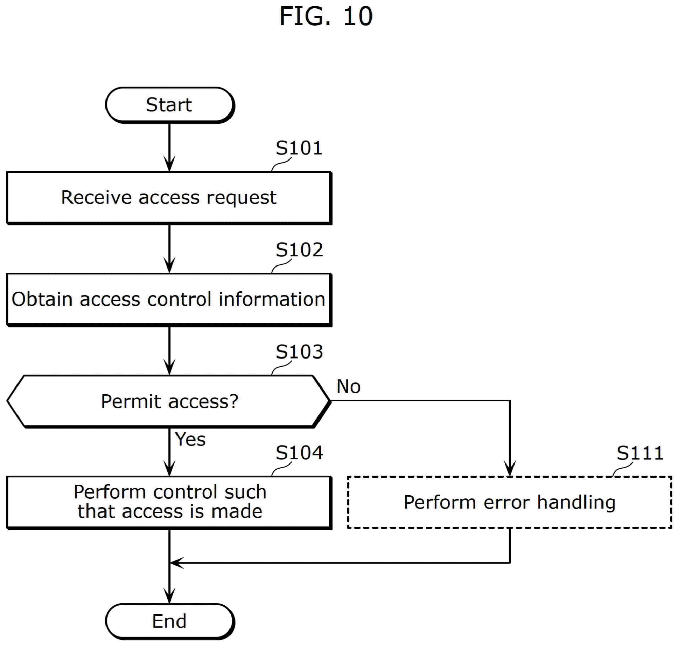

   FIG. 10 is a flowchart illustrating an access control process according to Embodiment 1.
[FIG. 11]

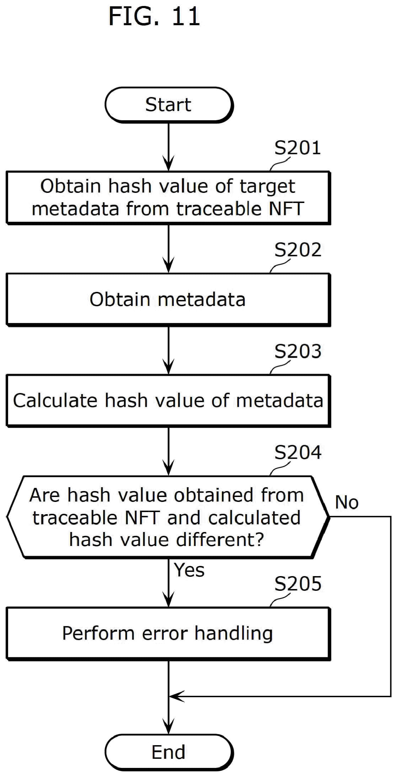

   FIG. 11 is a flowchart illustrating a metadata tamper-proofness checking process according to Embodiment 1.
[FIG. 12]

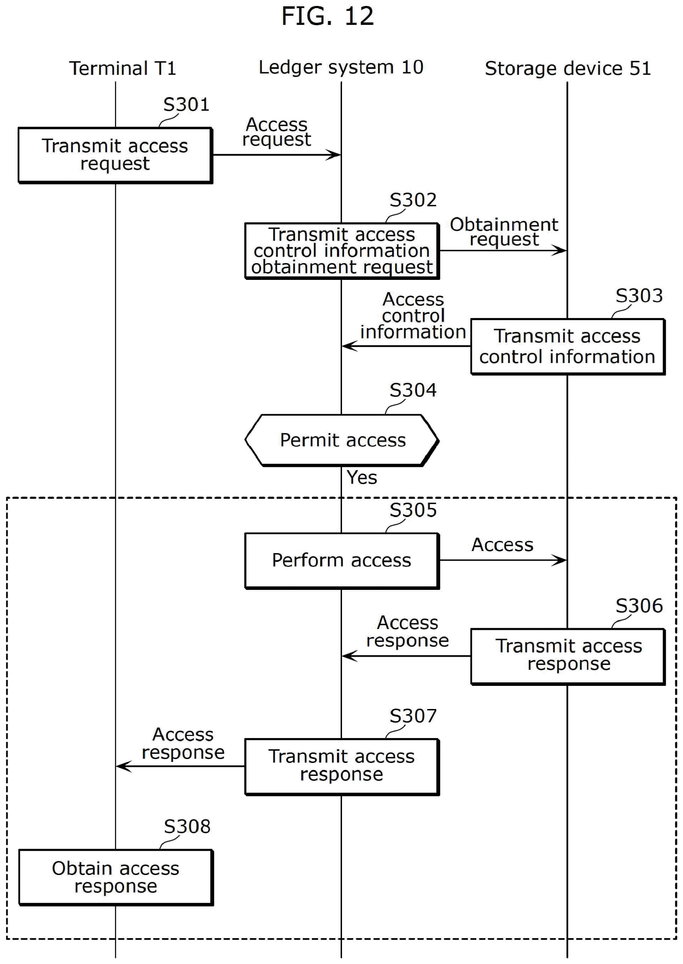

   FIG. 12 is a sequence chart illustrating the first example of an access control process according to Embodiment 1.
[FIG. 13]

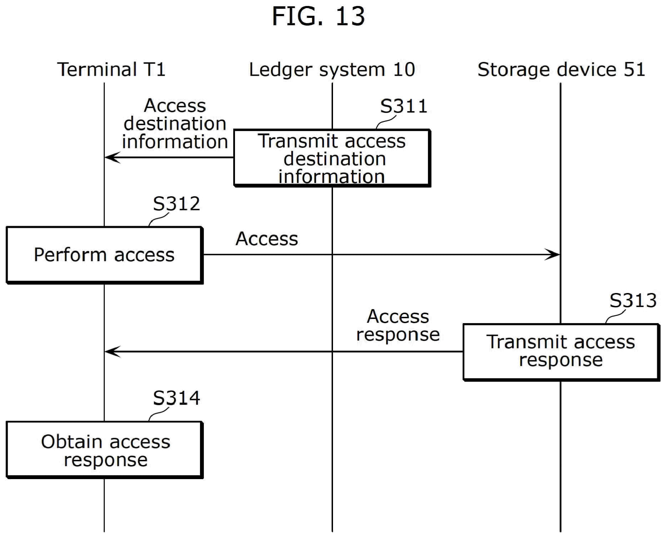

   FIG. 13 is a sequence chart illustrating the second example of an access control process according to Embodiment 1.
[FIG. 14]

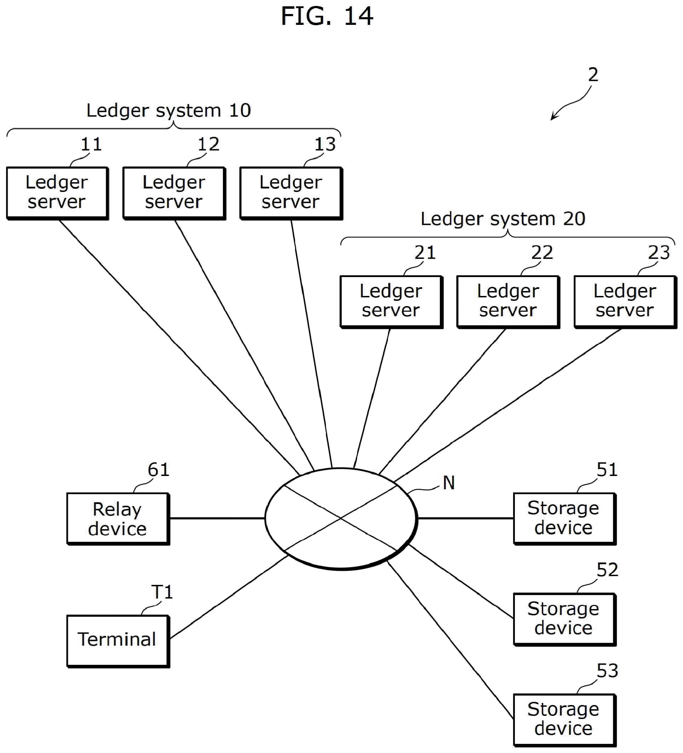

   FIG. 14 is a schematic diagram illustrating the overall configuration of an information processing system according to Embodiment 2.
[FIG. 15]

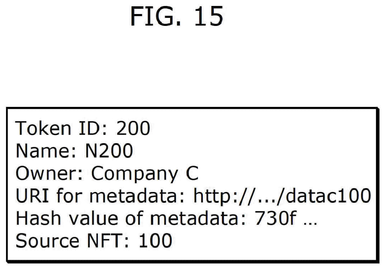

   FIG. 15 is an explanatory diagram illustrating an example of information included in a traceable NFT according to Embodiment 2.
[FIG. 16]

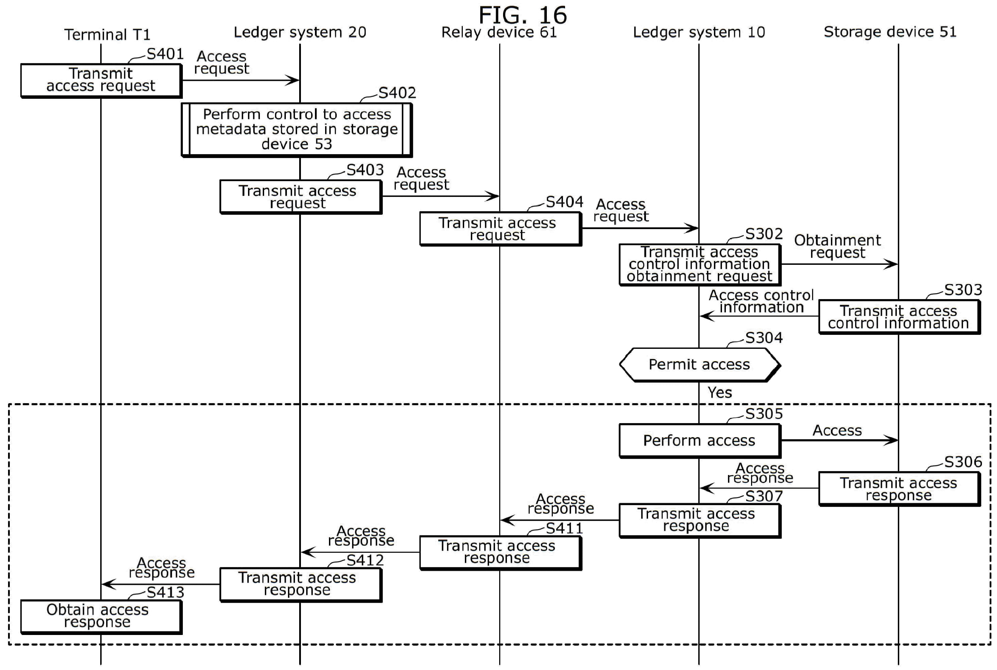

   FIG. 16 is a sequence chart illustrating the first example of an access control process according to Embodiment 2.
[FIG. 17]

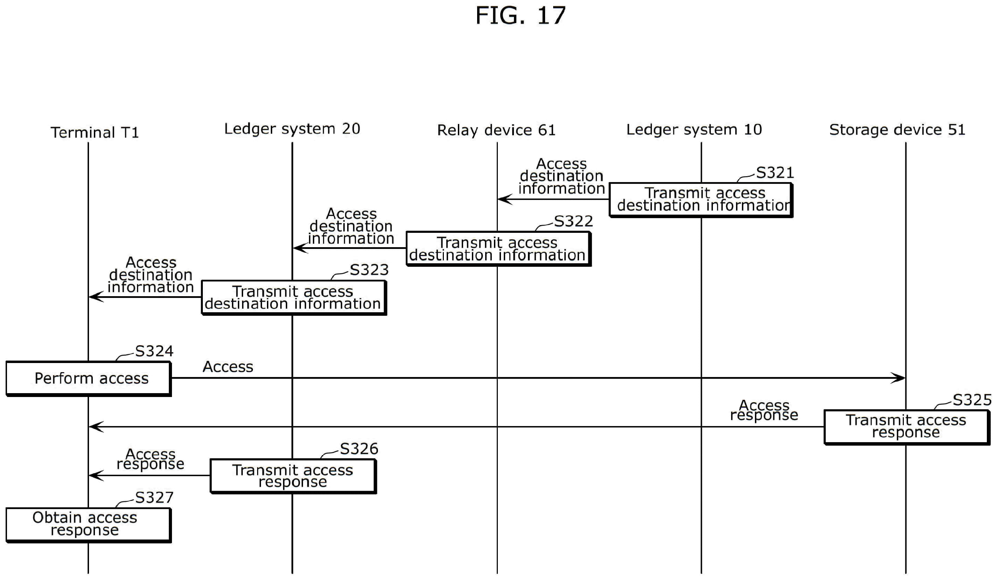

   FIG. 17 is a sequence chart illustrating the second example of an access control process according to Embodiment 2.
[FIG. 18]

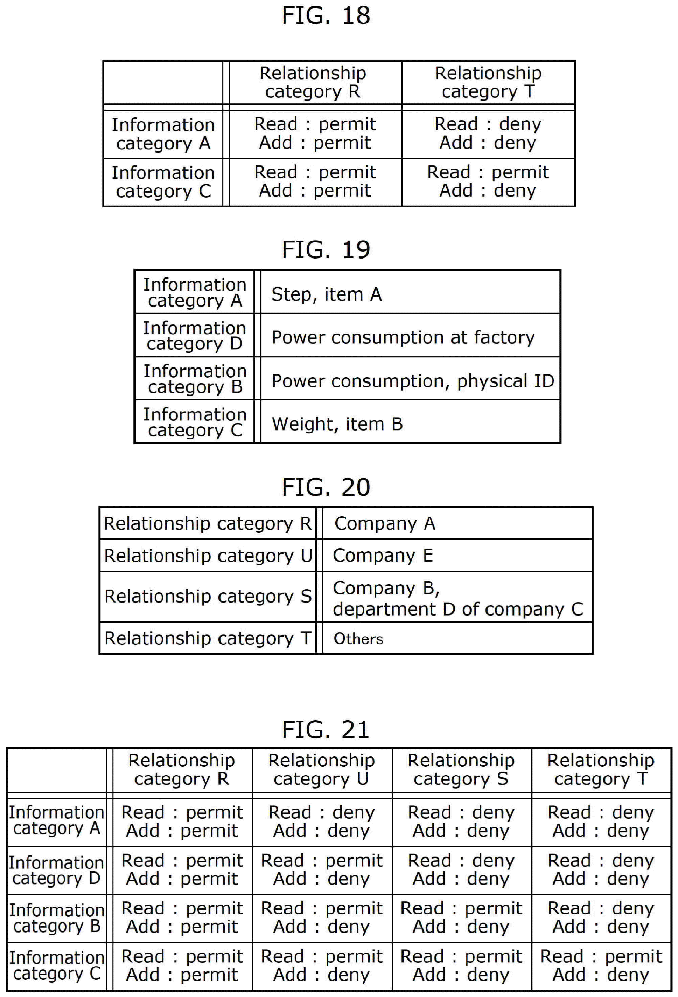

   FIG. 18 is an explanatory diagram illustrating an example of an access control table according to Variation 1 of an embodiment.
[FIG. 19]
   FIG. 19 is an explanatory diagram illustrating an example of information categories according to Variation 1 of an embodiment.
[FIG. 20]
   FIG. 20 is an explanatory diagram illustrating an example of relationship categories according to Variation 1 of an embodiment.
[FIG. 21]
   FIG. 21 is an explanatory diagram illustrating an example of an access control table according to Variation 2 of an embodiment.
[FIG. 22]

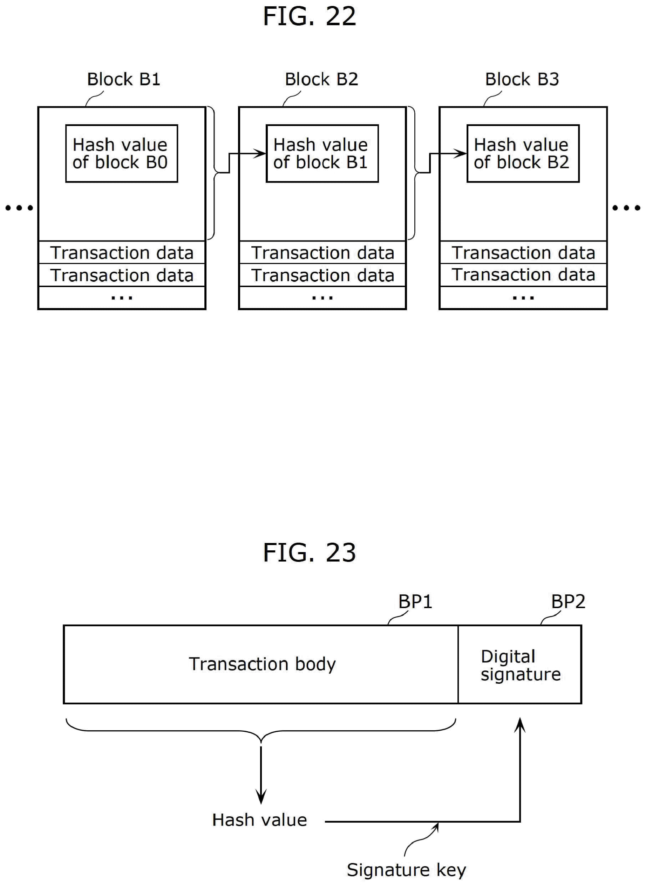

   FIG. 22 is an explanatory diagram illustrating the data structure of a blockchain which is an example of a distributed ledger.
[FIG. 23]
   FIG. 23 is an explanatory diagram illustrating the data structure of transaction data.
[FIG. 24]

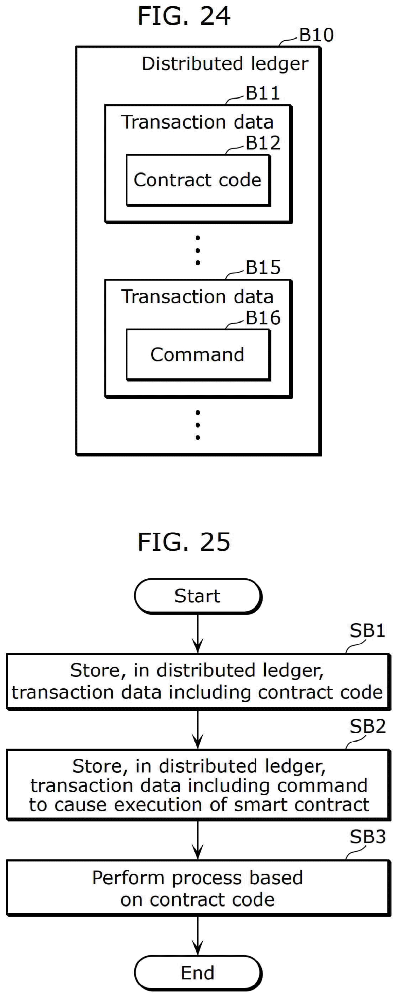

   FIG. 24 is an explanatory diagram illustrating transaction data related to execution of a smart contract.
[FIG. 25]
   FIG. 25 is a flowchart illustrating processing related to execution of a smart contract.
[FIG. 26]

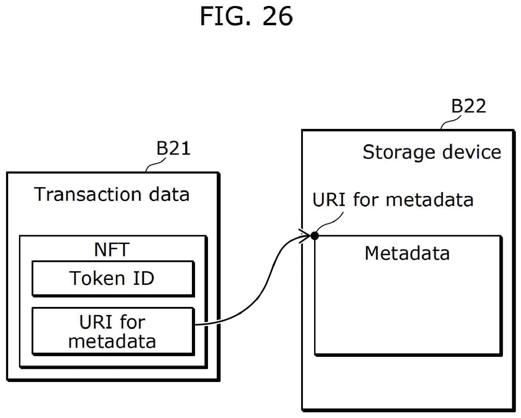

   FIG. 26 is an explanatory diagram illustrating the structures of an NFT and metadata.

### [Description of Embodiments]

### (Underlying Knowledge Forming Basis of the Present Invention)

The inventors identified the following problems with the technique related to confidentiality management of information described in the "Background Art" section.

Information used in the product lifecycle assessment may need to be managed as confidential information at various levels.

In general product lifecycles, resources are transferred and circulated among a plurality of organizations. Said resources are physical objects that arise throughout the lifecycle; specific examples include products, separated parts obtained by disassembling products, and recycled parts obtained by processing the separated parts and that are usable for manufacturing new products.

When the product lifecycle functions properly, separated parts are recovered from products discarded by users, and recycled parts produced from the separated parts are used for manufacturing new products. This circulation enables the effective use of resources. Note that the effective use of resources reduces the amount of resources required to manufacture new products, resulting in the advantageous effect of reducing the consumption of energy such as electric power needed to prepare for new resources.

Product lifecycle management requires management of information related to resources (also referred to as physical objects) that arise throughout the product lifecycle. If records of the physical objects that arise throughout the product lifecycle are not properly managed, the circulation of resources in the product lifecycle is compromised.

For example, information used in the product lifecycle assessment may include confidential information held by a company. Corporate confidential information refers to information that is prohibited from disclosure to entities outside the company and needs to be managed under strict confidentiality controls (in other words, information requiring a relatively high level of confidentiality management).

On the other hand, information used in said assessment may include information that may be disclosed to unspecified entities or information that is already known. The information that may be disclosed to unspecified entities or the information that is already known refers to information that does not need to be managed as confidential information or is less likely to require confidentiality management (in other words, information requiring a relatively low level of confidentiality management).

Information used in said assessment needs to be properly managed as confidential information according to the required level of confidentiality management.

In the confidentiality management of information used in the product lifecycle assessment, when a request for access to said information is made, whether to permit the access needs to be properly controlled for each content of the information or for each requester requesting the access. Furthermore, when the request for access to said information is made, the criteria for determining whether to permit the access may vary depending on the owners of physical objects that arise throughout the lifecycle.

However, the entities involved in the product lifecycle are relatively numerous and vary relatively widely. Therefore, it is difficult to control, for each content of target information to be accessed and for each requester requesting the access, whether to permit access to the target information. If a lookup table is prepared that maps the content of target information to be accessed and requesters requesting access in a matrix format to indicate whether to permit access, the lookup table will contain a vast amount of data, which can be difficult to manage. Furthermore, if a lookup table is prepared that indicates, for each content of information and for each requester requesting access, whether to permit access, a vast amount of data needs to be managed, which may cause an increase in memory consumption in computers.

The present invention provides an information processing method, etc., that contributes to proper confidentiality management of information related to the assessment of environmental impacts resulting from consumption activities.

Hereinafter, an invention obtained from the disclosure of the present specification will be described as an example, and advantageous effects, etc., obtained from the invention will be explained.
(1) An information processing method is performed by a server of a ledger system including a distributed ledger and includes: receiving, from a terminal, an access request for access to information included in metadata of a non-fungible token (NFT) stored in the distributed ledger and associated with a physical object or a service, the metadata being stored in a storage device; determining, according to access control information, whether to permit the access request from the terminal, the access control information being predetermined and indicating, for each first category indicating a type of information included in the metadata and for each second category indicating a requester requesting access to the information, whether to permit the access request for access to the information; and when determining that the access request is to be permitted, performing control to enable the access.

According to this aspect, the server of the ledger system can control the request for access to the information included in the metadata of the NFT, for each category of the type of the information and for each category of the requester requesting the access. If a lookup table is prepared that indicates whether to permit access, for each content of the information and for each requester requesting the access, a vast amount of data needs to be managed; when the control is performed as just described for each category of the type of the information and for each category of the requester requesting the access, access to the information can be properly controlled while facilitating the management of the access control information. Furthermore, the memory consumption in computer resources can be reduced. Thus, the server of the ledger system contributes to proper confidentiality management of information related to the assessment of environmental impacts resulting from consumption activities.

(2) In the information processing method described in (1), the first category includes: a category including information shared exclusively by an owner of the physical object associated with the NFT related to the metadata including the information or by a provider of the service associated with the NFT related to the metadata including the information; and a category including information provided from the owner or the provider without restriction, and the second category includes: a category including the owner or the provider; and a category including an entity having no relationship with the owner or the provider.

According to this aspect, the server of the ledger system can properly control access to the information more easily using two specific categories of the information and two specific categories of the requester requesting access. For example, using said categories, the server can properly conduct confidentiality management of the confidential information held by the owner. Thus, the server of the ledger system contributes to proper confidentiality management of information related to the assessment of environmental impacts resulting from consumption activities.

(3) In the information processing method described in (1), the first category includes: a category including information shared exclusively by an owner of the physical object associated with the NFT related to the metadata including the information or by a provider of the service associated with the NFT related to the metadata including the information; a category including information provided from the owner or the provider to an entity involved in a transaction of the physical object or the service; and a category including information provided from the owner or the provider without restriction, and the second category includes: a category including the owner or the provider; a category including the entity involved in the transaction of the physical object or the service; and a category including an entity having no relationship with the owner or the provider.

According to this aspect, the server of the ledger system can properly control access to the information more easily using three specific categories of the information and three specific categories of the requester requesting the access. For example, using said categories, the server can properly conduct confidentiality management of the confidential information held by the owner and the information related to a transaction of the physical object. Thus, the server of the ledger system contributes to proper confidentiality management of information related to the assessment of environmental impacts resulting from consumption activities.

(4) In the information processing method described in (1), the first category includes: a category including information shared exclusively by an owner of the physical object associated with the NFT related to the metadata including the information or by a provider of the service associated with the NFT related to the metadata including the information; a category including information provided from the owner or the provider to an authorized entity related to an environmental impact of the physical object or the service; a category including information provided from the owner or the provider to an entity involved in a transaction of the physical object or the service; and a category including information provided from the owner or the provider without restriction, and the second category includes: a category including the owner or the provider; a category including the authorized entity; a category including the entity involved in the transaction of the physical object or the service; and a category including an entity having no relationship with the owner or the provider.

According to this aspect, the server of the ledger system can properly control access to the information more easily using four specific categories of the information and four specific categories of the requester requesting the access. For example, using said categories, the server can properly conduct confidentiality management of the confidential information held by the owner, the information used in authorization related to the environmental impacts, and the information related to a transaction of the physical object. Thus, the server of the ledger system contributes to proper confidentiality management of information related to the assessment of environmental impacts resulting from consumption activities.

(5) In the information processing method described in (1), (i) the physical object includes: a first physical object owned by a first entity; and a second physical object owned by a second entity different from the first entity, or (ii) the service includes: a first service provided by a first entity; and a second service provided by a second entity different from the first entity, the access control information includes: first access control information predetermined by the first entity; and second access control information predetermined by the second entity, and in the determining of whether to permit the access request, whether to permit an access request for access to first information included in first metadata of a first NFT is determined using the first access control information, the first NFT being the NFT associated with the first physical object or the first service, and whether to permit an access request for access to second information included in second metadata of a second NFT is determined using the second access control information, the second NFT being the NFT associated with the second physical object or the second service.

According to this aspect, using the access control information predetermined for each owner of the physical object, the server of the ledger system can properly control access to the information more easily for the owner of the physical object. Thus, the server of the ledger system contributes to proper confidentiality management of information related to the assessment of environmental impacts resulting from consumption activities.

(6) The information processing method described in (1) further includes: receiving an access request from a relay device that has received the access request from a second server, the access request being a request for access to information included in the metadata of the NFT, the second server being included in a second ledger system different from a first ledger system that is the ledger system; determining, according to the access control information, whether to permit the access request; and when determining that the access request is to be permitted, performing control to enable the access.

According to this aspect, using the access control information for access to the information included in the metadata of the NFT stored in the plurality of ledger systems different from each other, the server of the ledger system can properly control said access more easily. Thus, the server of the ledger system contributes to proper confidentiality management of information related to the assessment of environmental impacts resulting from consumption activities.

(7) In the information processing method described in any one of (1) to (6), the access to the information includes: read access for reading the information stored in the storage device; and add access for adding new information to the storage device.

According to this aspect, using the access control information, the server of the ledger system can properly control read access and add access as the access. Thus, through the control of the read access and the add access, the server of the ledger system contributes to proper confidentiality management of information related to the assessment of environmental impacts resulting from consumption activities.

(8) In the information processing method described in (7), in the determining of whether to permit the access request, a read access request by a user belonging to the second category to access information belonging to the first category is determined to be permitted when the first category includes information shared exclusively by an owner of the physical object associated with the NFT related to the metadata including the information or by a provider of the service associated with the NFT related to the metadata including the information and the second category includes the owner or the provider, a read access request by a user belonging to the second category to access the information belonging to the first category is determined to be denied when the first category includes the information shared exclusively by the owner or the provider and the second category is other than the category including the owner or the provider, an add access request by the user belonging to the second category to access the information belonging to the first category is determined to be permitted when the first category includes the information shared exclusively by the owner or the provider and the second category includes the owner or the provider, and an add access request by the user belonging to the second category to access the information belonging to the first category is determined to be denied when the first category includes the information shared exclusively by the owner or the provider and the second category is other than the category including the owner or the provider.

According to this aspect, for the information shared exclusively by the owner of the physical object, the server of the ledger system can permit only the read access request from a user belonging to a category including the owner, and permit only the add access request from a user belonging to a category including the owner. This allows the server to properly conduct confidentiality management of the confidential information of the owner. Thus, the server of the ledger system contributes to conducting not only proper confidentiality management of the confidential information of the owner, but also proper confidentiality management of information related to the assessment of environmental impacts resulting from consumption activities.

(9) In the information processing method described in (7), the performing of the control to enable the access includes: when the access is the read access, (a) reading, from the storage device, the information to be read and providing the information or (b) providing information indicating a location of the information to be read; and when the access is the add access, (c) obtaining the information to be added and adding the information to the storage device or (d) providing information indicating a location of the storage device to which the information to be added is added.

According to this aspect, the server of the ledger system can specifically control the read access and the add access by, in response to the read access request, reading and providing the target or providing information indicating the location of the target, and in response to the add access request, adding the target to the storage device or providing information indicating the location of the storage device serving as the target. Thus, the server of the ledger system contributes to conducting, by more easily controlling the read access and the add access, proper confidentiality management of information related to the assessment of environmental impacts resulting from consumption activities.

(10) An information processing device is a server of a ledger system including a distributed ledger and includes: a communicator that receives, from a terminal, an access request for access to information included in metadata of a non-fungible token (NFT) stored in the distributed ledger and associated with a physical object or a service, the metadata being stored in a storage device; and an executor that determines, according to access control information, whether to permit the access request from the terminal, and when determining that the access request is to be permitted, performs control to enable the access, the access control information being predetermined and indicating, for each first category indicating a type of information included in the metadata and for each second category indicating a requester requesting access to the information, whether to permit the access request for access to the information.

According to this aspect, advantageous effects are produced that are substantially the same as those produced by the above-described information processing method.

(11) A program causes a computer to execute the information processing method described in (1).

According to this aspect, advantageous effects are produced that are substantially the same as those produced by the above-described information processing method.

Note that these general and specific aspects may be implemented using a system, a device, an integrated circuit, a computer program, or a computer-readable recording medium such as CD-ROM, or any combination of systems, devices, integrated circuits, computer programs, or recording media.

Hereinafter, an embodiment will be specifically described with reference to the drawings.

Note that each embodiment described below shows a general or specific example. The numerical values, shapes, materials, structural elements, the arrangement and connection of the structural elements, steps, the processing order of the steps, etc., shown in the following embodiments are mere examples, and are not intended to limit the present invention. Among the structural elements in the following embodiments, structural elements not recited in any one of the independent claims which indicate the broadest concepts will be described as optional structural elements.

### (Embodiment 1)

The present embodiment describes an information processing method and an information processing system that contribute to proper confidentiality management of information related to the assessment of environmental impacts resulting from consumption activities.

FIG. 1 is a schematic diagram illustrating the overall configuration of information processing system 1 according to the present embodiment. Information processing system 1 is an example of a system that contributes to proper confidentiality management of information related to the assessment of environmental impacts resulting from consumption activities.

As illustrated in FIG. 1, information processing system 1 includes ledger system 10 and storage devices 51, 52. Information processing system 1 is connected to terminal T1. Note that information processing system 1 may further include terminal T1. Said devices are connected to network N and can perform communication via network N.

Ledger system 10 is an information processing system (also referred to as the first distributed ledger system) that stores information by using a distributed ledger. Various data can be stored in the distributed ledger of ledger system 10. Data stored in the distributed ledger of ledger system 10 may be, for example, the creation history of a non-fungible token (NFT) associated with a physical object or a service in the real world, the transaction history of the NFT, and the like. The NFT may be, for example, an NFT configured such that the production or transaction of a physical object in the real world is tracked on the distributed ledger (also referred to as the traceable NFT). The physical object may be, but not limited to, a resource (for example, a product, a separated part, a recycled part, or the like) arising throughout the product lifecycle. The product may be, for example, a household appliance or the like. Alternatively, the NFT may be, for example, a traceable NFT configured such that the provision of a service in the real world is tracked on the distributed ledger.

The NFT is associated with a physical object in the real world in a one-to-one correspondence, for example; this case will be described as an example. Note that the term "a physical object in the real world" may refer to various units of measure. When the physical object is a product, the unit of measure of the physical object may be one product or may be one product serial number. When the physical object is plastic pellets or the like, the unit of measure of the physical object may be one flexible container holding the plastic pellets.

Note that a plurality of NFTs may be associated with one physical object in the real world. For example, an NFT that varies on a daily basis may be associated with one physical object. Furthermore, different organizations may associate different NFTs with the same physical object.

Ledger system 10 can perform processing according to a smart contract by using the distributed ledger. Through the processing according to the smart contract, ledger system 10 can create a traceable NFT and enable a transaction of the traceable NFT.

Ledger system 10 includes ledger servers 11, 12, 13 (also referred to as ledger servers 11, etc.) as a server group holding the distributed ledger. When at least one of ledger servers 11, etc., receives transaction data, the transaction data is shared by all ledger servers 11, etc., and is stored in the distributed ledger. Note that the number of ledger servers included in the server group is not limited to three and may be two or greater than three.

Ledger server 11 is a server that is a computer that holds and manages the distributed ledger. Ledger server 11, which holds the distributed ledger, updates the distributed ledger in synchronization with other ledger servers (specifically, ledger servers 12, 13).

Each of ledger servers 12, 13 is substantially the same server as ledger server 11 and operates independently of ledger server 11.

Storage device 51 is an information processing device including a storage device that stores data. Storage device 51 includes a communication interface connected to network N, and ledger system 10 or terminal T1 can access storage device 51 via network N. The metadata of the traceable NFT created by ledger system 10 can be stored in storage device 51. The access to storage device 51 includes read access and add access to the information included in the metadata. When storage device 51 receives a read access request, storage device 51 reads, from the storage device, the target information to be accessed, and transmits the information to terminal T1 or the like that has transmitted the read access request. When storage device 51 receives an add access request, storage device 51 additionally stores target information in the storage device, and transmits, to terminal T1 or the like that has transmitted the add access request, information indicating that the new information has been added. Furthermore, storage device 51, in which access control information is stored, can provide the access control information to ledger system 10.

Similar to storage device 51, storage device 52 is an information processing device including a storage device that stores data. Ledger system 10 or terminal T1 can access storage device 52 via network N. The metadata of the NFT created by ledger system 10 can be stored in storage device 52.

Managers for information stored in storage devices 51, 52 may be different from each other. For example, the manager for storage device 51 may be company A, and the manager for storage device 52 may be company B different from company A. Note that the managers for information stored in storage devices 51, 52 are not limited to companies and may be individuals or groups.

Terminal T1, which is an information processing device used by a user, is an information processing device used by a user who stores data in ledger system 10.

Terminal T1 includes a processor (for example, a central processing unit (CPU), same hereinafter), memory, a user interface (a display screen, a loudspeaker, a touch panel, or the like, same hereinafter), and a communication interface, and can accept information input through the user interface or the communication interface and generate information, display information, output information in the form of audio, or transmit and receive information. For example, terminal T1 may be a personal computer, a tablet, a smartphone, or the like. Specific processing performed by terminal T1 will be described in detail later.

FIG. 2 is a block diagram illustrating the functional configuration of ledger server 11 according to the present embodiment.

Ledger server 11 is an information processing device that includes communicator 101, ledger processor 102, executor 103, and storage 104 as function units. At least some of the function units included in ledger server 11 are realized by a processor (for example, a CPU) in ledger server 11 executing a program using memory.

Communicator 101 is a communication interface connected to network N so as to allow communication therebetween. Communicator 101 may be a communication interface that complies with a communication standard of wired communication (for example, Ethernet (registered trademark) or the like) or may be a communication interface that complies with a communication standard of wireless communication (for example, Wi-Fi (registered trademark) or the like or a mobile communication system (the 3rd generation (3G), the 4th generation (4G), the 5th generation (5G), or the like)). Communicator 101 is used by a function unit of ledger server 11 to communicate with another device.

Ledger processor 102 performs the processing related to distributed ledger 111 and the transaction data. Specifically, when ledger processor 102 receives the transaction data from terminal T1 or the like, ledger processor 102 performs control to verify a digital signature included in the received transaction data and store, in distributed ledger 111 held by storage 104, the transaction data that has been successfully verified. In storing the transaction data in distributed ledger 111, ledger processor 102 can perform control to generate a block including the transaction data to be stored, and when ledger processor 102 and ledger processors 102 of ledger servers 12, 13, which are other ledger servers, form an agreement on the generated block, store said block in distributed ledger 111.

Executor 103 performs information processing. For example, executor 103 can perform information processing by executing a smart contract using distributed ledger 111. Note that when executor 103 does not use a smart contract, executor 103 performs information processing according to a regular program code.

Executor 103 performs information processing related to NFTs, such as the process of generating a traceable NFT, as an example of said information processing. For example, when a new physical object is produced in the product lifecycle, a traceable NFT associated with the produced new physical object in a one-to-one correspondence is created and stored in the distributed ledger.

Executor 103 controls access to the metadata of the traceable NFT stored in distributed ledger 111 as an example of said information processing. The traceable NFT is associated with a physical object in the real world in a one-to-one correspondence and includes, as metadata, information including the type, quantity, or the like of the physical object associated with the traceable NFT. The physical object associated with the traceable NFT in a one-to-one correspondence is, for example, a physical object that arises throughout the product lifecycle, but this is not limiting. The metadata of the traceable NFT will be described in detail later (refer to FIG. 5 or FIG. 6).

An access request is transmitted from terminal T1 and received by communicator 101. In controlling the access, executor 103 can control the access by referring to predetermined access control information. Specifically, executor 103 determines, according to the access control information, whether to permit the access request from terminal T1, and when executor 103 determines that the access request is to be permitted, performs control to enable the access. The access control information is information indicating, for each category of the type of information included in the metadata (which corresponds to the first category) and for each category of the requester requesting access to the information (which corresponds to the second category), whether to permit a request for access to the information.

The access to information included in the metadata may include read access for reading said information and add access for adding new information to the metadata.

Furthermore, executor 103 can perform a checking process to confirm that the metadata of the traceable NFT has not been tampered with.

Storage 104 is a storage device that stores information. In storage 104, distributed ledger 111 is stored. Storage 104 is realized by a non-volatile storage device (such as a solid-state drive (SSD) or a hard disk drive (HDD)) or the like.

Distributed ledger 111 stores data having a structure in which blocks including one or more items of transaction data are linked together in the form of a chain. The one or more items of transaction data stored in distributed ledger 111 include transaction data containing a traceable NFT and a contract code of a smart contract, transaction data containing a command to execute a smart contract, and transaction data containing other information.

Hereinafter, information included in a traceable NFT will be described.

FIG. 3 is an explanatory diagram illustrating the first example of information included in a traceable NFT according to the present embodiment.

The traceable NFT illustrated in FIG. 3 is an example of a traceable NFT associated in a one-to-one correspondence with a physical object owned by company A. The traceable NFT associated in a one-to-one correspondence with the physical object owned by company A is stored in distributed ledger 111 of ledger system 10 (more specifically, ledger servers 11, etc.).

The information included in the traceable NFT in FIG. 3 includes: the token ID; the name; the owner; the uniform resource identifier (URI) for the metadata; the hash value of the metadata; and the material NFT.

The token ID is identification information for uniquely identifying the traceable NFT. The token ID is, for example, "100."

The name is the name of the physical object associated with the traceable NFT in a one-to-one correspondence. The name is, for example, "N100."

The owner is information indicating the owner of the physical object associated with the traceable NFT in a one-to-one correspondence. The owner is, for example, "company A."

The URI for the metadata is an URI, specifically, a uniform resource locator that is information indicating the location of the metadata of the traceable NFT. The URI for the metadata is, for example, "http://.../dataa100."

The hash value of the metadata is the hash value of the metadata of the traceable NFT. The hash value of the metadata is, for example, "043a..." The hash value of the metadata is calculated and stored, for example, when the metadata is stored in the storage device (specifically, storage device 51). The hash algorithm for calculating the hash value may be a known technique such as SHA256 or SHA512.

The material NFT is the token ID of the traceable NFT associated in a one-to-one correspondence with the material of the physical object associated with the traceable NFT in a one-to-one correspondence. The material NFT is, for example, "A100."

FIG. 4 is an explanatory diagram illustrating the second example of information included in a traceable NFT according to the present embodiment.

The traceable NFT illustrated in FIG. 4 is an example of a traceable NFT associated in a one-to-one correspondence with a physical object owned by company B. The traceable NFT associated in a one-to-one correspondence with the physical object owned by company B is stored in distributed ledger 111 of ledger system 10 (more specifically, ledger servers 11, etc.).

The information included in the traceable NFT in FIG. 4 includes: the token ID; the name; the owner; the URI for the metadata; the hash value of the metadata; and the material NFT. These items of the information are substantially the same as those of the information illustrated in FIG. 3.

As an example, in the traceable NFT illustrated in FIG. 4, the token ID is "110." The name is "N110." The owner is "company B." The URI for the metadata is "http://.../datab100." The hash value of the metadata is "18ac..." The material NFT is "B100."

Note that the hash value of the metadata is calculated and stored, for example, when the metadata is stored in the storage device (specifically, storage device 52).

Hereinafter, information included in metadata will be described.

FIG. 5 is an explanatory diagram illustrating the first example of information included in metadata according to the present embodiment.

The metadata illustrated in FIG. 5, which is the metadata of the traceable NFT (refer to FIG. 3) associated in a one-to-one correspondence with the physical object owned by company A, is stored in storage device 51.

The information included in the metadata in FIG. 5 includes: the token ID; the physical ID; the weight; the step; the power consumption; and items A and B.

The token ID is the token ID of the traceable NFT related to the metadata. The token ID is, for example, "100."

The physical ID is identification information for uniquely identifying the physical object associated in a one-to-one correspondence with the traceable NFT related to the metadata. The physical ID may be, for example, identification information provided on the exterior of the physical object. The physical ID is, for example, "Flexible container 100." Note that the flexible container is the abbreviation for the flexible storage container.

The weight is information indicating the weight of the physical object associated in a one-to-one correspondence with the traceable NFT related to the metadata. The weight is, for example, a10 (kg).

The step is identification information indicating the step in which the physical object associated in a one-to-one correspondence with the traceable NFT related to the metadata is produced. The step is, for example, "b10."

The power consumption is information indicating the amount of electric power consumed in the production of the physical object associated in a one-to-one correspondence with the traceable NFT related to the metadata. The power consumption is, for example, c10 (kWh).

Item A or B is an item including arbitrary information. Item A or B is, for example, attribute information indicating the attributes of the physical object associated in a one-to-one correspondence with the traceable NFT related to the metadata or relevant information relevant to the physical object.

FIG. 6 is an explanatory diagram illustrating the second example of information included in metadata according to the present embodiment.

The metadata illustrated in FIG. 6, which is the metadata of the traceable NFT (refer to FIG. 4) associated in a one-to-one correspondence with the physical object owned by company B, is stored in storage device 52.

The information included in the metadata in FIG. 6 includes: the token ID; the physical ID; the weight; the step; the power consumption; and items A and B. These items of the information are substantially the same as those of the information illustrated in FIG. 5.

As an example, in the traceable NFT illustrated in FIG. 6, the token ID is "110." The physical ID is "Flexible container 200." The weight is, for example, a11 (kg). The step is "b11." The power consumption is c11 (kWh).

Hereinafter, an information category, a relationship category, and an access control table will be described with reference to FIG. 7 to FIG. 9. The access control table is an example of the access control information.

FIG. 7 is an explanatory diagram illustrating an example of information categories according to the present embodiment. An information category indicates the category to which the target information to be accessed belongs. The information category may include one or more items of information. Note that including two or more items of information in a single information category can contribute to a reduction in the number of information categories in the access control table.

FIG. 7 shows three information categories A, B, C.

Information category A is the category including information shared exclusively by the owner of the physical object, that is, company A (in other words, within company A). In information category A shown in FIG. 7, information related to "Step" and information related to "Item A" are included.

Information category B is the category including information provided to an entity involved in a transaction of the physical object. In information category B shown in FIG. 7, information related to "Power consumption" and information related to "Physical ID" are included.

Information category C is the category including information provided without restriction. In information category C shown in FIG. 7, information related to "Weight" and information related to "Item B" are included.

FIG. 8 is an explanatory diagram illustrating an example of relationship categories according to the present embodiment. A relationship category indicates the category to which a requester requesting access belongs. In other words, the relationship category indicates the category to which the relationship between the owner of the physical object associated in a one-to-one correspondence with the traceable NFT related to the metadata including the target information to be accessed and the requester requesting access belongs. The relationship category may include one or more items of relationship. Note that including two or more items of relationship in a single relationship category can contribute to a reduction in the number of relationship categories in the access control table.

FIG. 8 shows three relationship categories R, S, T.

Relationship category R is the category including the owner of the physical object. In relationship category R shown in FIG. 8, company A is included.

Relationship category S is the category including an entity involved in a transaction of the physical object. In relationship category S shown in FIG. 8, company B and department D of company C are included. Company B and department D of company C are a company and a department that are involved in a transaction of the physical object owned by company A.

Relationship category T is the category including an entity having no relationship with the owner of the physical object. In relationship category T shown in FIG. 8, "Others," specifically, entities other than company A, company B, and department D of company C, which are included in relationship categories R and S, are included.

FIG. 9 is an explanatory diagram illustrating an example of an access control table according to the present embodiment.

The access control table illustrated in FIG. 9 indicates, for each information category and for each relationship category, whether ledger servers 11, etc., permit the request for access to the information stored in storage device 51.

In the access control table, three information categories A, B, C are indicated in the vertical direction, and three relationship categories R, S, T are indicated in the horizontal direction. Information categories A, B, C are those indicated in FIG. 7. Relationship categories R, S, T are those indicated in FIG. 8.

The access control table indicates, for each of one or more types of access, whether to permit or deny the access.

In the access control table, "Read" represents read access as a type of access, and "Add" represents add access as a type of access. Furthermore, "permit" represents that the access is to be permitted, and "deny" represents that the access is to be denied. The same applies hereinafter.

For example, the access control table indicates that the read access and the add access to information belonging to information category A by a user belonging to relationship category R are to be permitted.

Furthermore, the access control table indicates that the read access to information belonging to information category B by a user belonging to relationship category S is to be permitted and the add access to information belonging to information category B by a user belonging to relationship category S is to be denied.

Furthermore, the access control table indicates that the read access and the add access to information belonging to information category B by a user belonging to relationship category T are to be denied.

The information belonging to the other categories is handled as indicated in FIG. 9.

Note that the number of information categories is not limited to three; it is sufficient that the number of information categories be at least two. Similarly, the number of relationship categories is not limited to three; it is sufficient that the number of relationship categories be at least two. The variations to be described later describe examples where the number of information categories or relationship categories included in the access control table is different from that described above.

Note that the access control table may be predetermined for each owner of the physical object associated with the traceable NFT.

For example, when the metadata of the traceable NFT associated in a one-to-one correspondence with the physical object owned by company A is stored in storage device 51, the access control table for access to the information included in the metadata may be that predetermined by company A. In this case, the access control table for access to the information included in the metadata may also be stored in storage device 51. Similarly, when the metadata of the traceable NFT associated in a one-to-one correspondence with the physical object owned by company B is stored in storage device 52, the access control table for access to the information included in the metadata may be that predetermined by company B. In this case, the access control table for access to the information included in the metadata may also be stored in storage device 52.

In this case, using the access control table (corresponding to the first access control information) predetermined by company A, executor 103 can determine whether to permit the request for access to the information (corresponding to the first information) included in the metadata (corresponding to the first metadata) of the NFT (corresponding to the first NFT) associated in a one-to-one correspondence with the physical object (corresponding to the first physical object) owned by company A. Furthermore, using the access control table (corresponding to the second access control information) predetermined by company B, executor 103 can determine whether to permit the request for access to the information (corresponding to the second information) included in the metadata (corresponding to the second metadata) of the NFT (corresponding to the second NFT) associated in a one-to-one correspondence with the physical object (corresponding to the second physical object) owned by company B. Here, when the access control table illustrated in FIG. 9 corresponds to the first access control information, the second access control information, which is the access control table predetermined by company B, may be different from the first access control information illustrated in FIG. 9.

Hereinafter, the processing of ledger system 10 will be described.

FIG. 10 is a flowchart illustrating an access control process according to the present embodiment.

The processing illustrated in FIG. 10 is the processing performed by ledger servers 11, etc., of ledger system 10 upon an attempt by terminal T1 to access information included in the metadata of the traceable NFT.

In Step S101, communicator 101 receives, from terminal T1 of a user, a request for access to the information included in the metadata of the traceable NFT stored in distributed ledger 111. Executor 103 obtains the access request received by communicator 101. The user may be the owner of the physical object, the entity having a relationship with the owner, or the entity having no relationship with the owner.

In Step S102, executor 103 obtains the access control information from storage device 51. Specifically, executor 103 specifies the information targeted by the access request received by communicator 101 in Step S101, and specifies the storage device storing the access control information indicating whether to permit the request for access to said information. Executor 103 obtains the access control information from the specified storage device. For example, when the information targeted by the access request is related to the physical object owned by company A, executor 103 specifies storage device 51 as the storage device storing the access control information indicating whether to permit the request for access to said information.

In Step S103, by referring to the access control information obtained in Step S102, executor 103 determines whether to permit the access related to the access request received in Step S101. Specifically, executor 103 specifies, from among the plurality of information categories determined in advance (for example, information categories A, B, C shown in FIG. 9), the information category to which the information targeted by the access request belongs. Executor 103 specifies the source of the access request as a requester requesting the access, and specifies, from among the relationship categories determined in advance (for example, relationship categories R, S, T shown in FIG. 9), the relationship category to which the requester requesting the access belongs. Furthermore, executor 103 specifies the type of access related to the access request (specifically, read access or add access), and determines whether to permit the access of said type. By referring to the access control table, executor 103 determines whether to permit the requester belonging to the specified relationship category to access the information belonging to the specified information category (in other words, whether to permit or deny the access request). When it is determined that the access related to the access request received in Step S101 is to be permitted (Yes in Step S103), processing proceeds to Step S104; otherwise (No in Step S103), processing proceeds to Step S111.

In Step S104, executor 103 performs control such that the access related to the access request received in Step S101 is performed. An example of the control is that executor 103 performs the access and transmits, to terminal T1, a response obtained by performing the access (also referred to as an access response). Another example of the control is that executor 103 transmits, to terminal T1, information indicating an address for the access and terminal T1 performs the access and receives a response obtained by performing the access (also referred to as an access response).

More specifically, when the access related to the access request received in Step S101 is read access, executor 103 (a) reads, from the storage device, the information to be read and provides the information or (b) provides information indicating the location of the information to be read. When the access related to the access request received in Step S101 is add access, executor 103 (c) obtains the information to be added and adds the information to the storage device or (d) provides information indicating the location of the storage device to which the information to be added is added.

In Step S111, executor 103 performs error handling. The error handling includes generating error information indicating that the access request transmitted in Step S101 has not been permitted (in other words, denied). Executor 103 may store the generated error information in distributed ledger 111 or may transmit the generated error information to terminal T1.

Note that executor 103 may prohibit execution of the process in Step S111; in other words, the process in Step S111 does not need to be performed. For example, when the access from terminal T1 is malicious, execution of the process in Step S111 may trigger further malicious access. Skipping the process in Step S111 produces the advantageous effect of suppressing malicious access.

Through the above series of processes, executor 103 can determine, for example, that the read access and the add access from company A to confidential information of the physical object owned by company A are to be permitted, whereas the read access and the add access from entities other than company A are to be denied.

This means that executor 103 determines that a read access request is to be permitted when the read access request is for access to information belonging to the information category including the information shared exclusively by the owner of the physical object associated in a one-to-one correspondence with the NFT related to the metadata including the target information to be accessed, from a user belonging to the relationship category including the owner.

Furthermore, executor 103 determines that a read access request is to be denied when the read access request is for access to the information belonging to the information category including the information shared exclusively by the owner, from a user belonging to the relationship category other than the relationship category including the owner.

Furthermore, executor 103 determines that an add access request is to be permitted when the add access request is for access to the information belonging to the information category including the information shared exclusively by the owner, from a user belonging to the relationship category including the owner.

Furthermore, executor 103 determines that an add access request is to be denied when the add access request is for access to the information belonging to the information category including the information shared exclusively by the owner, from a user belonging to the relationship category other than the relationship category including the owner.

FIG. 11 is a flowchart illustrating a metadata tamper-proofness checking process according to the present embodiment. As an example, the process of checking the tamper-proofness of the metadata stored in storage device 51 will be described. The process of checking the tamper-proofness is the process of verifying that the target metadata has not been tampered with.

The processing shown in FIG. 11 may be performed at least prior to performing the read access to information included in the metadata. Furthermore, the processing shown in FIG. 11 may be repeatedly performed at a predetermined time interval (of about a few hours to a few days).

In Step S201, executor 103 obtains, from the traceable NFT, the hash value of the target metadata to be checked for tampering. The hash value of the metadata is, for example, the hash value calculated by executor 103 using a hash algorithm for the metadata when the metadata is stored in storage device 51 (refer to FIG. 3).

In Step S202, executor 103 reads and obtains the target metadata to be checked for tampering from storage device 51.

In Step S203, using the hash algorithm, executor 103 calculates the hash value of the metadata obtained in Step S202.

In Step S204, executor 103 compares the hash value obtained in Step S201 (also referred to as the first hash value) and the hash value of the metadata calculated in Step S203 (also referred to as the second hash value), and determines whether the first hash value and the second hash value are different. A discrepancy between the first hash value and the second hash value indicates that the metadata has been tampered with since being stored in the storage device. On the other hand, no discrepancy (that is, a match) between the first hash value and the second hash value may indicate that the metadata has not been tampered with since being stored in the storage device. When it is determined that the first hash value and the second hash value are different (Yes in Step S204), processing proceeds to Step S205; otherwise (No in Step S204), the series of processes shown in FIG. 11 ends.

In Step S205, executor 103 performs error handling. The error handling may include, for example, invalidating the target metadata checked for tampering or the traceable NFT related to the metadata. This is to prevent subsequent reference to the tampered metadata or the traceable NFT related to the metadata, upon confirmation that the metadata has been tampered with. Furthermore, the error handling may include the process of denying access to the tampered metadata or the traceable NFT related to the metadata or the process of deleting the tampered metadata or the traceable NFT related to the metadata.

Note that the processing shown in FIG. 11 may be performed by terminal T1 or another device. In this case, executor 103 appearing as the subject in the processing described above is substituted with terminal T1 or another device.

Hereinafter, the processing of information processing system 1 will be described.

FIG. 12 is a sequence chart illustrating the first example of an access control process according to the present embodiment. FIG. 12 shows, as an example, the processes performed by information processing system 1 upon an attempt by terminal T1 to access information included in the metadata of the traceable NFT associated in a one-to-one correspondence with the physical object owned by company A. The metadata of the traceable NFT associated in a one-to-one correspondence with the physical object owned by company A is stored in storage device 51.

In Step S301, terminal T1 transmits an access request to ledger system 10. Ledger system 10 receives the access request transmitted thereto. The process in Step S301 corresponds to the process in Step S101 (refer to FIG. 10).

In Step S302, ledger system 10 transmits, to storage device 51, an access control information obtainment request for information targeted by the access request received in Step S301. Storage device 51 receives the access control information obtainment request transmitted thereto.

In Step S303, as a result of receiving the access control information obtainment request in Step S302, storage device 51 reads the stored access control information and transmits the access control information to ledger system 10. Ledger system 10 receives and obtains the access control information transmitted thereto.

The processes in Steps S302 and S303 correspond to the process in Step S102 (refer to FIG. 10).

In Step S304, by referring to the access control information obtained in Step S303, ledger system 10 determines whether to permit the access related to the access request received in Step S301.

The following describes the case where ledger system 10 determines that said access is to be permitted (Yes in Step S304).

In Step S305, ledger system 10 accesses storage device 51 according to the access request received in Step S301. Specifically, ledger system 10 transmits, to storage device 51, a command corresponding to the type of access (that is, read access or add access). Storage device 51 receives the command transmitted thereto.

Note that in Step S305, ledger system 10 may perform the process of checking the tamper-proofness of the metadata. In this case, when it is confirmed in the process of checking the tamper-proofness of the metadata that the metadata has not been tampered with, storage device 51 may be accessed.

In Step S306, storage device 51 performs the process according to the command received in Step S305 and transmits the execution result to ledger system 10 as an access response. Ledger system 10 receives the access response transmitted thereto. Specifically, when the command received in Step S305 indicates read access, storage device 51 reads the stored information and transmits the read information to ledger system 10 as an access response. When the command received in Step S305 indicates add access, storage device 51 additionally stores target information and transmits, to ledger system 10, an access response that is information indicating that the new information has been successfully added.

In Step S307, ledger system 10 transmits, to terminal T1, the access response received in Step S306. Terminal T1 receives the access response transmitted thereto.

In Step S308, terminal T1 obtains, as a response to the access request transmitted in Step S301, the access response received in Step S307.

The processes in Steps S305 to S308 correspond to the process in Step S104 (refer to FIG. 10).

Through the series of processes shown in FIG. 12, information processing system 1 can properly control access to information while facilitating the management of the access control information. Furthermore, information processing system 1 can perform the requested access and provide the access response to the terminal. In this manner, information processing system 1 contributes to proper confidentiality management of information related to the assessment of environmental impacts resulting from consumption activities.

FIG. 13 is a sequence chart illustrating the second example of the access control process according to the present embodiment. Similar to FIG. 12, FIG. 13 shows some of the processes performed by information processing system 1 upon an attempt by terminal T1 to access information included in the metadata of the traceable NFT associated in a one-to-one correspondence with the physical object owned by company A.

The processes shown in FIG. 13 are performed after the processes included in Steps S301 to S304 shown in FIG. 12 are performed. The processes shown in FIG. 13 may also be regarded as a variation of the processes enclosed by the dashed frame in FIG. 12.

In Step S311, ledger system 10 transmits, to terminal T1, information indicating the address for the access related to the access request received in Step S301 (also referred to as access destination information). Terminal T1 receives the access destination information transmitted thereto. The access destination, which is the metadata of the traceable NFT associated in a one-to-one correspondence with the physical object owned by company A, is storage device 51.

In Step S312, terminal T1 accesses storage device 51, which is the destination for the access indicated in the access destination information received in Step S311. Specifically, terminal T1 transmits, to storage device 51, a command corresponding to the type of access (that is, read access or add access). Storage device 51 receives the command transmitted thereto.

Note that in Step S312, terminal T1 may perform the process of checking the tamper-proofness of the metadata. In this case, when it is confirmed in the process of checking the tamper-proofness of the metadata that the metadata has not been tampered with, storage device 51 may be accessed.

In Step S313, storage device 51 performs the process according to the command received in Step S312 and transmits the execution result to terminal T1 as an access response. Terminal T1 receives the access response transmitted thereto. The process performed by storage device 51 according to the received command is substantially the same as Step S306 (refer to FIG. 12).

In Step S314, terminal T1 obtains the access response received in Step S313, as a response to the access performed in Step S312 and as a response to the access request transmitted in Step S301.

Through the series of processes shown in FIG. 13, information processing system 1 can properly control access to information while facilitating the management of the access control information. Furthermore, information processing system 1 can provide information for allowing terminal T1 to perform the requested access, cause terminal T1, etc., to perform the access, and cause the terminal to obtain the access response. In this manner, information processing system 1 contributes to proper confidentiality management of information related to the assessment of environmental impacts resulting from consumption activities.

Note that "the physical object" in the above description may be substituted with an organization such as an electronics retailer or may be substituted with a service such as the sale of electronics.

In this case, the physical object owned by company A or the like may be substituted with a service, etc., provided by company A or the like. The owner of the physical object may be substituted with the provider of the service.

The traceable NFT associated with the physical object owned by company A may be substituted with the traceable NFT associated with the production of a household appliance, the traceable NFT associated with an organization such as an electronics retailer, or the traceable NFT associated with the service provided by company A. The physical ID may be substituted with service ID which is identification information for uniquely identifying the service. The metadata of the traceable NFT associated with the service provided by company A may include not only the token ID and the service ID, but also information indicating the attributes of the service. The information indicating the attributes of the service may include information indicating the amount of electric power consumed in providing the service or equipment and supplies purchased for providing the service.

As a result, information processing system 1 can properly control access to information related to the provision of the service while facilitating the management of the access control information, and contributes to proper confidentiality management of information related to the assessment of environmental impacts resulting from consumption activities.

### (Embodiment 2)

The present embodiment describes another example of an information processing method and an information processing system that contribute to proper confidentiality management of information related to the assessment of environmental impacts resulting from consumption activities.

FIG. 14 is a schematic diagram illustrating the overall configuration of information processing system 2 according to the present embodiment. Information processing system 2 is an example of a system that contributes to proper confidentiality management of information related to the assessment of environmental impacts resulting from consumption activities. Information processing system 2 according to the present embodiment differs from the information processing system according to Embodiment 1 described above in that a plurality of ledger systems 10, 20 are included and a storage device for storing information may differ for each ledger system.

As illustrated in FIG. 14, information processing system 2 includes ledger system 10, ledger system 20, storage devices 51, 52, 53, and relay device 61. Information processing system 2 is connected to terminal T1. Note that information processing system 2 may further include terminal T1. Said devices are connected to network N and can perform communication via network N.

Ledger system 10, storage devices 51, 52, and terminal T1 illustrated in FIG. 14 are the same as those illustrated in FIG. 1; therefore, detailed description thereof will be omitted.

Ledger system 20 is an information processing system that stores information using a distributed ledger and operates independently of ledger system 10. In the distributed ledger of ledger system 20, various data can be stored including data of the same type as that stored in the distributed ledger of ledger system 10 and data of different types.

Similar to ledger system 10, ledger system 20 can perform processing according to a smart contract by using the distributed ledger. Through the processing according to the smart contract, ledger system 20 can create a traceable NFT and enable a transaction of the traceable NFT.

Ledger system 20 may have features different from those of ledger system 10. For example, ledger system 10 and ledger system 20 may have different data-storage features or may have different configuration features (specifically, regarding the configurations of devices included in said systems).

The features of ledger system 10 and ledger system 20 may include, for example, the consensus algorithm used to store transaction data in the distributed ledger, the number of nodes (i.e., information processing devices) included in the ledger systems, the type of information that can be stored in the distributed ledger, the processing speed for transaction data, and the fees required to store a block including the transaction data in the distributed ledger.

Ledger system 20 includes ledger servers 21, 22, 23 (also referred to as ledger servers 21, etc.) as a server group holding the distributed ledger. When at least one of ledger servers 21, etc., receives transaction data, the transaction data is shared by all ledger servers 21, etc., and is stored in the distributed ledger. Note that the number of ledger servers included in the server group is not limited to three and may be two or greater than three.

Ledger server 21 is a server that is a computer that holds and manages the distributed ledger. Ledger server 21, which holds the distributed ledger, updates the distributed ledger in synchronization with other ledger servers (specifically, ledger servers 22, 23). The functional configuration of ledger server 21 is substantially the same as that of ledger server 11 (refer to FIG. 2); therefore, detailed description thereof will be omitted.

Each of ledger servers 22, 23 is substantially the same server as ledger server 21 and operates independently of ledger server 21.

Storage device 53 is a storage device that stores data. Ledger system 20 or terminal T1 can access storage device 53 via network N. The metadata of the NFT created by ledger system 20 can be stored in storage device 53. The access to storage device 53 includes read access and add access to the information included in the metadata. When storage device 53 receives a read access request, storage device 53 reads, from the storage device, the target information to be accessed, and transmits the information to terminal T1 or the like that has transmitted the read access request. When storage device 53 receives an add access request, storage device 53 additionally stores target information in the storage device, and transmits, to terminal T1 or the like that has transmitted the add access request, information indicating that the new information has been added. Furthermore, storage device 53, in which access control information is stored, can provide the access control information to ledger system 20.

The manager for the information stored in storage device 53 may be different from the managers for the information stored in storage device 51 and storage device 52. For example, when the manager for storage device 51 is company A and the manager for storage device 52 is company B, the manager for storage device 53 may be company C. Note that the manager for information stored in storage device 53 is not limited to a company and may be an individual or a group.

Relay device 61 is an information processing device that relays the transfer of information between ledger system 10 and ledger system 20. Relay device 61, which includes a processor, memory, and a communication interface, performs communication between ledger system 10 and ledger system 20 using the communication interface to relay the transfer of information between ledger system 10 and ledger system 20. For example, relay device 61 may be a personal computer, a server device, or the like.

When relay device 61 receives, from ledger system 20, a request for access to information related to the traceable NFT stored in ledger system 10, relay device 61 transmits the access request to ledger system 10. In this case, ledger system 10 determines, according to the access control information, whether to permit the access request, and when ledger system 10 determines that the access request is to be permitted, performs control to enable the access. An example of the control is that executor 103 performs the access and transmits, to terminal T1 via relay device 61, a response obtained by performing the access (also referred to as an access response). Another example of the control is that executor 103 transmits, to terminal T1 via relay device 61, information indicating an address for the access and terminal T1 performs the access and receives a response obtained by performing the access (also referred to as an access response).

FIG. 15 is an explanatory diagram illustrating an example of information included in a traceable NFT according to the present embodiment.

The traceable NFT illustrated in FIG. 15 is an example of a traceable NFT associated in a one-to-one correspondence with a physical object owned by company C. The traceable NFT associated in a one-to-one correspondence with the physical object owned by company C is stored in distributed ledger 111 of ledger system 20 (more specifically, ledger servers 21, etc.).

The information included in the traceable NFT in FIG. 15 includes: the token ID; the name; the owner; the URI for the metadata; and the hash value of the metadata. The items of the information are substantially the same as those of the information illustrated in FIG. 3.

As an example, in the traceable NFT illustrated in FIG. 15, the token ID is "200." The name is "N200." The owner is "company C." The URI for the metadata is "http://.../datac100." The hash value of the metadata is "730f..."

Furthermore, the information included in the traceable NFT in FIG. 15 includes a source NFT.

The source NFT is the token ID of the NFT associated in a one-to-one correspondence with a physical object that is the source of the physical object associated in a one-to-one correspondence with said traceable NFT. The source NFT is, for example, "100," which represents the traceable NFT illustrated in FIG. 3. When the source NFT of the traceable NFT having token ID 200 is 100, this indicates that the physical object associated in a one-to-one correspondence with the traceable NFT having token ID 200 is produced from the physical object associated in a one-to-one correspondence with the traceable NFT illustrated in FIG. 3.

FIG. 16 is a sequence chart illustrating the first example of the access control process according to the present embodiment. As an example, FIG. 16 shows the processes performed by information processing system 2 upon an attempt by terminal T1 to access information included in the metadata of the traceable NFT having token ID 200 and associated in a one-to-one correspondence with the physical object owned by company C and obtain information related to said physical object that includes the source of said physical object. The metadata of the traceable NFT associated in a one-to-one correspondence with the physical object owned by company C is stored in storage device 53. The metadata of the source of the physical object owned by company C, that is, the metadata of the traceable NFT having token ID 100, is stored in storage device 51.

In Step S401, terminal T1 transmits an access request to ledger system 20. The access request is requesting read access for reading information included in the metadata of the traceable NFT having token ID 200. Ledger system 20 receives the access request transmitted thereto.

In Step S402, while performing the access control, ledger system 20 obtains the metadata stored in storage device 53. The process in which ledger system 20 obtains the metadata stored in storage device 53 is the same as the process of performing read access to read the metadata stored in storage device 51 in Embodiment 1 described above (refer to FIG. 10); therefore, detailed description thereof will be omitted.

Ledger system 20 obtains token ID 100 as the source NFT from the traceable NFT having token ID 200 and obtains the traceable NFT having token ID 100. Subsequently, the process of obtaining the traceable NFT having token ID 100 will be performed.

In Step S403, ledger system 20 transmits an access request to relay device 61. Relay device 61 receives the access request transmitted thereto. The access request is requesting read access for reading information included in the metadata of the traceable NFT having token ID 100.

In Step S404, as a result of receiving the access request from ledger system 20 in Step S403, relay device 61 transmits the access request to ledger system 10. Ledger system 10 receives the access request transmitted thereto. The access request is requesting read access for reading information included in the metadata of the traceable NFT having token ID 100.

Ledger system 10 that has received the access request from relay device 61 obtains the access control information related to the access and when ledger system 10 determines that the access is to be permitted, ledger system 10 performs control to enable the access, similar to the case where ledger system 10 receives the access request from terminal T1 in Embodiment 1 described above. As an example, ledger system 10 performs the read access and receives an access response (Steps S302 to S307). When ledger system 10 receives the access response, ledger system 10 transmits the received access response to relay device 61. Relay device 61 receives the access response transmitted thereto.

In Step S411, as a result of receiving the access response in Step S307, relay device 61 transmits the access response to ledger system 20. Ledger system 20 receives the access response transmitted thereto.

In Step S412, as a result of receiving the access response in Step S411, ledger system 20 transmits the access response to terminal T1. At this time, ledger system 20 may transmit, to terminal T1, the access response received as a result of the access performed in Step S402. Terminal T1 receives the access response transmitted thereto.

In Step S413, terminal T1 obtains, as a response to the access request transmitted in Step S401, the access response received in Step S412.

Through the series of processes shown in FIG. 16, information processing system 2 can properly control access to information while facilitating the management of the access control information. Furthermore, information processing system 2 can perform the requested access and provide the access response to the terminal. In this manner, information processing system 2 contributes to proper confidentiality management of information related to the assessment of environmental impacts resulting from consumption activities.

FIG. 17 is a sequence chart illustrating the second example of the access control process according to the present embodiment. Similar to FIG. 16, FIG. 17 shows some of the processes performed by information processing system 2 upon an attempt by terminal T1 to access information included in the metadata of the traceable NFT having token ID 200 and associated in a one-to-one correspondence with the physical object owned by company C and obtain information related to said physical object that includes the source of said physical object.

The processes shown in FIG. 17 are performed after the processes included in Steps S401 to S404 and Steps S302 to S304 shown in FIG. 16 are performed. The processes shown in FIG. 17 may also be regarded as a variation of the processes enclosed by the dashed frame in FIG. 16.

In Step S321, ledger system 10 transmits, to relay device 61, information indicating the address for the access related to the access request received in Step S302 (also referred to as access destination information). Relay device 61 receives the access destination information transmitted thereto. The access destination, which is the metadata of the traceable NFT associated in a one-to-one correspondence with the physical object owned by company A, is storage device 51.

In Step S322, as a result of receiving the access destination information in Step S321, relay device 61 transmits the access destination information to ledger system 20. Ledger system 20 receives the access destination information transmitted thereto.

In Step S323, as a result of receiving the access destination information in Step S322, ledger system 20 transmits the access destination information to terminal T1. Terminal T1 receives the access destination information transmitted thereto.

In Step S324, terminal T1 accesses storage device 51, which is the destination for the access indicated in the access destination information received in Step S323. Specifically, terminal T1 transmits, to storage device 51, a command corresponding to the type of access (that is, read access). Storage device 51 receives the command transmitted thereto.

Note that in Step S324, terminal T1 may perform the process of checking the tamper-proofness of the metadata. In this case, when it is confirmed in the process of checking the tamper-proofness of the metadata that the metadata has not been tampered with, storage device 51 may be accessed.

In Step S325, storage device 51 performs the process according to the command received in Step S324 and transmits the execution result to terminal T1 as an access response. Terminal T1 receives the access response transmitted thereto. The process performed by storage device 51 according to the received command is substantially the same as Step S306 (refer to FIG. 12).

In Step S326, ledger system 20 may transmit, to terminal T1, the access response received as a result of the access performed in Step S402. Terminal T1 receives the access response transmitted thereto.

In Step S327, terminal T1 obtains the access response received in Step S325 and the access response received in Step S326, as a response to the access performed in Step S401.

Through the series of processes shown in FIG. 17, information processing system 2 can properly control access to information while facilitating the management of the access control information. Furthermore, information processing system 2 can provide information for allowing terminal T1 to perform the requested access, cause terminal T1, etc., to perform the access, and cause the terminal to obtain the access response. In this manner, information processing system 2 contributes to proper confidentiality management of information related to the assessment of environmental impacts resulting from consumption activities.

Note that in Embodiment 1 or Embodiment 2 described above, by referring to the "URI for metadata" included in the traceable NFT, it may be possible to infer that the physical object associated with the traceable NFT in a one-to-one correspondence is owned by company A. For example, when the "URI for metadata" includes a character string such as "http://a-company.com/.../dataa100" that represents company A (specifically, "a-company"), the character string representing company A included in the "URI for metadata" may be used to infer that the physical object associated with the traceable NFT in a one-to-one correspondence is owned by company A.

In this case, for example, a traceable NFT that includes substantially the same items of information as those in the traceable NFT shown in FIG. 3 and is not associated with an actual physical object in a one-to-one correspondence (also referred to as a dummy NFT) may be stored in distributed ledger 111 of ledger system 10 or ledger system 20 as the traceable NFT. The access control may be configured such that the traceable NFT is accessible only to an entity authorized as being involved with company A.

Furthermore, for example, the following ledger systems may be provided including: a ledger system that can be referred to from company A and company B; a ledger system that is accessible only to company A and a group of companies related to company A; and a ledger system that is accessible only to company B and a group of companies related to company B. Furthermore, the access control may be performed for each of (i) company A and companies belonging to the group of companies related to company A and (ii) company B and companies belonging to the group of companies related to company B.

Furthermore, for example, a proxy server for viewing metadata may be provided. In this case, the "URI for metadata" included in the traceable NFT includes an address within the proxy server. This may prevent inference of the owner of the physical object associated with the traceable NFT in a one-to-one correspondence based on the address within the proxy server.

### (Variation 1 of Embodiment)

The present variation describes a variation of the access control table.

FIG. 18 is an explanatory diagram illustrating an example of the access control table according to the present variation.

The access control table illustrated in FIG. 18 indicates, for each information category and for each relationship category, whether to permit the request for access to the information stored in storage device 51.

In the access control table, two information categories A, C are indicated in the vertical direction, and relationship categories R, T are indicated in the horizontal direction. Information categories A, C are substantially the same as information categories A, C shown in FIG. 7. Relationship categories R, T are substantially the same as relationship categories R, T shown in FIG. 8.

For example, the access control table indicates that the read access and the add access to information belonging to information category A by a user belonging to relationship category R are to be permitted.

Furthermore, the access control table indicates that the read access to information belonging to information category C by a user belonging to relationship category T is to be permitted and the add access to information belonging to information category C by a user belonging to relationship category T is to be denied.

The information belonging to the other categories is handled as indicated in FIG. 18.

The use of the access control table illustrated in FIG. 18 allows ledger servers 11, etc., to properly control access to the information more easily using two specific categories of the information and two specific categories of the requester requesting access. For example, using said categories, the server can properly conduct confidentiality management of the confidential information held by the owner. Thus, the server of the ledger system contributes to proper confidentiality management of information related to the assessment of environmental impacts resulting from consumption activities.

### (Variation 2 of Embodiment)

The present variation describes a variation of the access control table.

FIG. 19 is an explanatory diagram illustrating an example of the information categories according to the present variation.

FIG. 19 shows four information categories A, D, B, C.

Information categories A, B, C are substantially the same as information categories A, B, C shown in FIG. 7.

Information category D is the category including information provided to an authorized entity related to the environmental impacts of the physical object. Information category D shown in FIG. 19 includes "Power consumption at factory."

FIG. 20 is an explanatory diagram illustrating an example of the relationship categories according to the present variation.

FIG. 20 shows four relationship categories R, U, S, T.

Relationship categories R, S, T are substantially the same as relationship categories R, S, T shown in FIG. 8.

Relationship category U is the category including an authorized entity related to the environmental impacts of the physical object. In relationship category U shown in FIG. 20, company E is included. Company E may be a company that performs authorization related to the environmental impacts of the physical object.

FIG. 21 is an explanatory diagram illustrating an example of the access control table according to the present variation.

The access control table illustrated in FIG. 21 indicates, for each information category and for each relationship category, whether to permit the request for access to the information stored in storage device 51.

In the access control table, four information categories A, D, B, C are indicated in the vertical direction, and relationship categories R, U, S, T are indicated in the horizontal direction. Information categories A, D, B, C are those indicated in FIG. 19. Relationship categories R, U, S, T are those indicated in FIG. 20.

For example, the access control table indicates that the read access and the add access to information belonging to information category D by a user belonging to relationship category R are to be permitted.

Furthermore, the access control table indicates that the read access to information belonging to information category D by a user belonging to relationship category U is to be permitted and the add access to information belonging to information category D by a user belonging to relationship category U is to be denied.

The information belonging to the other categories is handled as indicated in FIG. 21.

The use of the access control table illustrated in FIG. 21 allows ledger servers 11, etc., to properly control access to the information more easily using four specific categories of the information and four specific categories of the requester requesting access. For example, using said categories, the server can properly conduct confidentiality management of the confidential information held by the owner, the information used in authorization related to the environmental impacts, and the information related to a transaction of the physical object. Thus, the server of the ledger system contributes to proper confidentiality management of information related to the assessment of environmental impacts resulting from consumption activities.

### (Explanation about Distributed Ledger System)

Distributed ledger systems 10, 20 described above (which will also be referred to as the distributed ledger system) will be described in detail below.

The distributed ledger system is a system that stores and maintains information by using the peer-to-peer (P2P) networking technology in which a plurality of nodes are connected. Each of the nodes is an information processing device that performs a predetermined process by a processor (for example, CPU) executing a program by using memory.

In the distributed ledger system, the plurality of nodes hold copies of information in an autonomous, decentralized manner, and remain synchronized with each other. Thus, the distributed ledger system can properly store information while substantially preventing tampering with the information, without using a privileged node (for example, a centralized server or a client/server-model server).

A device that needs to access the distributed ledger is required to only access one of the plurality of nodes included in the distributed ledger system; in other words, the device does not need to access devices such as a few centralized servers. As a result, the concentration of communication loads or processing loads on the centralized servers that may occur in a centralized system will be avoided. Therefore, there is no demand for high-specification resources (CPU, memory, and the like) of the node, and the required communication capacity of a communication line to which the node is connected is not so large, which are advantageous. As a result, the distributed ledger system can be configured of commonly used (or versatile) nodes or communication lines, meaning that the distributed ledger system can contribute to the effect of reducing the required computer resources or communication resources or reducing the cost required for the nodes and the communication lines.

Furthermore, the distributed ledger system can store information with a high resistance to failure and allows the information to be referred to with a high resistance to failure. Generally, the plurality of nodes within the distributed ledger system are dispersed either physically or in terms of network topology. This is because, although the distributed ledger system stops when all the nodes within the distributed ledger system stop, it is rare that all the nodes dispersed either physically or in terms of network topology stop, meaning that the distributed ledger system rarely stops. This is advantageous against the failure to store information or the failure to refer to information when the centralized servers stop, which may occur in a centralized system.

With reference to FIG. 22 to FIG. 26, the data structure of the distributed ledger, the execution of the smart contract, and the data structure of the NFT will be described.

FIG. 22 is an explanatory diagram illustrating the data structure of a blockchain which is an example of the distributed ledger.

A blockchain is made up of blocks, each of which is a recording unit of the blockchain, linked together in the form of a chain. Each of the blocks includes a plurality of items of transaction data and a hash value of an immediately preceding block.

FIG. 22 illustrates blocks B1, B2, and B3 included in the blockchain.

For example, block B2 includes the hash value of previous block B1. The hash value of block B1 is a hash value calculated by applying a hash algorithm to the content of block B1.

Furthermore, a hash value calculated using the hash value of block B1 and the plurality of items of transaction data included in block B2 is included in block B3 as the hash value of block B2.

Thus, a blockchain is configured such that blocks each including the content of a previous block as a hash value are linked together in the form of a chain and therefore, the recorded transaction data can be effectively prevented from being tampered with.

If previous transaction data is changed (in other words, tampered with), the hash value of the block including said transaction data becomes different from the original value. In this case, in order to make the block including the modified transaction data look correct, all the blocks subsequent to said block in the distributed ledger stored in the plurality of servers need to be recreated, which is an extremely difficult task in practice. With this feature, the transaction data included in the blockchain can be virtually impossible to tamper with.

Note that when storing transaction data in a blockchain, a node generates a block including the transaction data to be stored and performs processing based on a consensus algorithm to form an agreement on the generated block with other nodes. When the agreement is formed, the node performs control to store said block in the blockchain. Thus, the plurality of nodes that operate in an autonomous, decentralized manner can connect valid blocks to the blockchain. As the consensus algorithm, practical byzantine fault tolerance (PBFT) may be used, or proof of work (PoW), proof of stake (PoS), or the like may be used. Note that when Hyperledger Fabric is used as an example of the distributed ledger technology, the consensus algorithm does not need to be executed.

FIG. 23 is an explanatory diagram illustrating the data structure of the transaction data.

The transaction data illustrated in FIG. 23 includes transaction body BP1 and digital signature BP2 (also referred to simply as the signature). Transaction body BP1 is a data body included in said transaction data. Digital signature BP2 is generated by encrypting the hash value of transaction body BP1 with a signature key (in other words, a private key) of a creator of said transaction data.

Using digital signature BP2 included in the transaction data, a node that has received the transaction data can verify that transaction body BP1 is valid (in other words, has not been tampered with). Thus, the data included in transaction body BP1 can be virtually impossible to tamper with. Furthermore, by storing the successfully verified transaction data in the blockchain, the validity of the transaction data stored in the blockchain can be maintained.

As described above, the transaction data included in the blockchain is joined together using the hash values of the transaction data and the hash values of the blocks when stored in the blockchain. This allows the transaction data included in the blockchain to be stored and maintained in a substantially tamper-proof manner. This is an advantage different from that of a distributed database or a database in which a collection of data is simply stored.

FIG. 24 is an explanatory diagram illustrating transaction data related to the execution of the smart contract. FIG. 25 is a flowchart illustrating the processing related to the execution of the smart contract.

With reference to FIG. 24 and FIG. 25, a series of processes related to the execution of the smart contract using the distributed ledger will be described.

In Step SB1, a node stores, in distributed ledger B10, transaction data B11 including contract code B12 in which the processing of the smart contract is written. For example, the node receives transaction data B11 from an information processing device via communication or the node itself generates transaction data B11 and thus, the node obtains transaction data B11, and stores obtained transaction data B11 in distributed ledger B10. Step SB1 is performed before the smart contract is executed.

In Step SB2, the node stores, in distributed ledger B10, transaction data B15 including command B16 to cause the execution of the smart contract. For example, the node receives transaction data B15 from an information processing device via communication and stores received transaction data B15 in distributed ledger B10.

In Step SB3, the node reads contract code B12 from distributed ledger B10 as a result of transaction data B15 including command B16 being stored in distributed ledger B10 in Step SB2, and performs processing based on contract code B12. The result of said processing may be included in the transaction data and stored in distributed ledger B10.

When the distributed ledger system receives transaction data B15 including command B16 to cause the execution of the smart contract, the distributed ledger system automatically (in other words, without manual intervention) performs processes that follow command B16 by the above-described series of processes and can therefore perform the processes efficiently (in other words, at high speed or in a short time). Realization of the efficient processes results in the effect of reduced power consumption. Furthermore, since there is no manual intervention, tampering with information by a person, a fraudulent act, or a human error can be prevented. Moreover, since the result of the processes performed in this manner is stored in the blockchain, the result of the processes can be virtually impossible to tamper with.

FIG. 26 is an explanatory diagram illustrating the structures of an NFT and metadata. The NFT, which is a unique token (in other words, a non-fungible token), is a token stored in the distributed ledger. The NFT is standardized as Ethereum request for comments (ERC) 721, for example, but this is not limiting; the NFT may be a token that complies with a standard different from ERC 721 or may be a token that complies with no standards (for example, a token specific to an organization). Note that ERC 721 is a standard for unique tokens, but the NFTs described in the present specification do not necessarily need to be unique tokens.

FIG. 26 illustrates transaction data B21 stored in the distributed ledger. In transaction data B21, an NFT is stored. The NFT includes: the token ID (specifically, the identification information for uniquely identifying the NFT); and the uniform resource identifier (URI) for the metadata.

The NFT includes the metadata. The metadata may be positioned (for example, in storage device B22) to be accessible via a network. The URI for the metadata that indicates the location of the metadata can be calculated using the token ID of the NFT and a predetermined base URI.

Information managed as the NFT may be included in transaction data B21 or may be included in the metadata. Including the information managed as the NFT in the metadata is advantageous in that the amount of information included in transaction data B21 (in other words, the information included in the blockchain) can be reduced. In this case, it can also be said that the metadata includes the substance of the information managed as the NFT. When an image is managed as the NFT, an URL indicating the image data of said image can be managed as the NFT.

Note that in the above embodiments, each of the structural elements may be configured in the form of an exclusive hardware product, or may be realized by executing a software program suitable for the structural element. Each of the structural elements may be realized by means of a program executing unit, such as a CPU or a processor, reading and executing the software program recorded on a recording medium such as a hard disk or a semiconductor memory. Here, the software program for realizing the information processing device, etc., according to the above embodiments is a program described below.

Specifically, this program causes a computer to perform an information processing method that is performed by a server of a ledger system including a distributed ledger and includes: receiving, from a terminal, an access request for access to information included in metadata of a non-fungible token (NFT) stored in the distributed ledger and associated with a physical object or a service, the metadata being stored in a storage device; determining, according to access control information, whether to permit the access request from the terminal, the access control information being predetermined and indicating, for each first category indicating a type of information included in the metadata and for each second category indicating a requester requesting access to the information, whether to permit the access request for access to the information; and when determining that the access request is to be permitted, performing control to enable the access.

The information processing method, etc., according to one or more aspects have been described thus far based on the embodiments, but the present invention is not limited to these embodiments. Various modifications to the present embodiments and forms configured by combining structural elements in different embodiments that can be conceived by those skilled in the art may be included within the scope of one or more aspects as long as these do not depart from the essence of the present invention.

### [Industrial Applicability]

The present invention is applicable to a system including a plurality of distributed ledgers.

### [Reference Signs List]

- 1, 2: information processing system
- 10, 20: ledger system
- 11, 12, 13, 21, 22, 23: ledger server
- 51, 52, 53, B22: storage device
- 61: relay device
- 101: communicator
- 102: ledger processor
- 103: executor
- 104: storage
- 111, B10: distributed ledger
- B1, B2, B3: block
- B11, B15, B21: transaction data
- B12: contract code
- B16: command
- BP1: transaction body
- BP2: digital signature
- N: network
- T1: terminal

## Claims

1. An information processing method performed by a server of a ledger system including a distributed ledger, the information processing method comprising:
receiving, from a terminal, an access request for access to information included in metadata of a non-fungible token (NFT) stored in the distributed ledger and associated with a physical object or a service, the metadata being stored in a storage device;
determining, according to access control information, whether to permit the access request from the terminal, the access control information being predetermined and indicating, for each first category indicating a type of information included in the metadata and for each second category indicating a requester requesting access to the information, whether to permit the access request for access to the information; and
when determining that the access request is to be permitted, performing control to enable the access.

2. The information processing method according to claim 1, wherein
the first category includes:
a category including information shared exclusively by an owner of the physical object associated with the NFT related to the metadata including the information or by a provider of the service associated with the NFT related to the metadata including the information; and
a category including information provided from the owner or the provider without restriction, and
the second category includes:
a category including the owner or the provider; and
a category including an entity having no relationship with the owner or the provider.

3. The information processing method according to claim 1, wherein
the first category includes:
a category including information shared exclusively by an owner of the physical object associated with the NFT related to the metadata including the information or by a provider of the service associated with the NFT related to the metadata including the information;
a category including information provided from the owner or the provider to an entity involved in a transaction of the physical object or the service; and
a category including information provided from the owner or the provider without restriction, and
the second category includes:
a category including the owner or the provider;
a category including the entity involved in the transaction of the physical object or the service; and
a category including an entity having no relationship with the owner or the provider.

4. The information processing method according to claim 1, wherein
the first category includes:
a category including information shared exclusively by an owner of the physical object associated with the NFT related to the metadata including the information or by a provider of the service associated with the NFT related to the metadata including the information;
a category including information provided from the owner or the provider to an authorized entity related to an environmental impact of the physical object or the service;
a category including information provided from the owner or the provider to an entity involved in a transaction of the physical object or the service; and
a category including information provided from the owner or the provider without restriction, and
the second category includes:
a category including the owner or the provider;
a category including the authorized entity;
a category including the entity involved in the transaction of the physical object or the service; and
a category including an entity having no relationship with the owner or the provider.

5. The information processing method according to claim 1, wherein
(i) the physical object includes: a first physical object owned by a first entity; and a second physical object owned by a second entity different from the first entity, or
(ii) the service includes: a first service provided by a first entity; and a second service provided by a second entity different from the first entity,
the access control information includes: first access control information predetermined by the first entity; and second access control information predetermined by the second entity, and
in the determining of whether to permit the access request,
whether to permit an access request for access to first information included in first metadata of a first NFT is determined using the first access control information, the first NFT being the NFT associated with the first physical object or the first service, and
whether to permit an access request for access to second information included in second metadata of a second NFT is determined using the second access control information, the second NFT being the NFT associated with the second physical object or the second service.

6. The information processing method according to claim 1, further comprising:
receiving an access request from a relay device that has received the access request from a second server, the access request being a request for access to information included in the metadata of the NFT, the second server being included in a second ledger system different from a first ledger system that is the ledger system;
determining, according to the access control information, whether to permit the access request; and
when determining that the access request is to be permitted, performing control to enable the access.

7. The information processing method according to any one of claims 1 to 6, wherein
the access to the information includes:
read access for reading the information stored in the storage device; and
add access for adding new information to the storage device.

8. The information processing method according to claim 7, wherein
in the determining of whether to permit the access request,
a read access request by a user belonging to the second category to access information belonging to the first category is determined to be permitted when the first category includes information shared exclusively by an owner of the physical object associated with the NFT related to the metadata including the information or by a provider of the service associated with the NFT related to the metadata including the information and the second category includes the owner or the provider,
a read access request by a user belonging to the second category to access the information belonging to the first category is determined to be denied when the first category includes the information shared exclusively by the owner or the provider and the second category is other than the category including the owner or the provider,
an add access request by the user belonging to the second category to access the information belonging to the first category is determined to be permitted when the first category includes the information shared exclusively by the owner or the provider and the second category includes the owner or the provider, and
an add access request by the user belonging to the second category to access the information belonging to the first category is determined to be denied when the first category includes the information shared exclusively by the owner or the provider and the second category is other than the category including the owner or the provider.

9. The information processing method according to claim 7, wherein
the performing of the control to enable the access includes:
when the access is the read access,
(a) reading, from the storage device, the information to be read and providing the information or (b) providing information indicating a location of the information to be read; and
when the access is the add access,
(c) obtaining the information to be added and adding the information to the storage device or (d) providing information indicating a location of the storage device to which the information to be added is added.

10. An information processing device that is a server of a ledger system including a distributed ledger, the information processing device comprising:
a communicator that receives, from a terminal, an access request for access to information included in metadata of a non-fungible token (NFT) stored in the distributed ledger and associated with a physical object or a service, the metadata being stored in a storage device; and
an executor that determines, according to access control information, whether to permit the access request from the terminal, and when determining that the access request is to be permitted, performs control to enable the access, the access control information being predetermined and indicating, for each first category indicating a type of information included in the metadata and for each second category indicating a requester requesting access to the information, whether to permit the access request for access to the information.

11. A program for causing a computer to perform the information processing method according to claim 1.
